(19) Europäisches Patentamt
European Patent Office
Office européen des brevets

(11) **EP 0 857 605 A2**

(12) **EUROPÄISCHE PATENTANMELDUNG**

(43) Veröffentlichungstag:
12.08.1998 Patentblatt 1998/33

(51) Int. Cl.$^6$: **B60L 7/02**

(21) Anmeldenummer: 98101188.5

(22) Anmeldetag: 23.01.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 07.02.1997 DE 19704704

(71) Anmelder:
SIEMENS AKTIENGESELLSCHAFT
80333 München (DE)

(72) Erfinder:
• Bakran, Mark-Matthias, Dr.
  91054 Erlangen (DE)
• Teigelkötter, Johannes, Dr.
  91074 Herzogenaurach (DE)

(54) **GTO-Bremssteller**

(57) Die Erfindung bezieht sich auf einen GTO-Bremssteller, der ein GTO-Phasenmodul (2) mit asymmetrischer Beschaltung (B), einen Beschaltungswiderstand (R2), eine Kommutierungsinduktivität (L1) und einen Bremswiderstand ($R_B$) aufweist. Erfindungsgemäß sind zwei Bremswiderstände ($R_{B1}$, $R_{B2}$) als Bremswiderstand ($R_B$) vorgesehen, wobei ein erster Anschluß dieses zweiten Bremswiderstandes ($R_{B2}$) mit dem Last-Anschluß (2) des GTO-Phasenmoduls (2) und ein zweiter Anschluß mit einem zweiten Anschluß der Kommutierungsinduktivität (L1) verknüpft sind, der erste Bremswiderstand ($R_{B1}$) mittels einer Anzapfung (10) in zwei elektrisch in Reihe geschaltete Teilwiderstände ($R_{B11}$, $R_{B12}$) unterteilt ist, wobei ein erster Anschluß dieses zweiten Teilwiderstandes ($R_{B12}$) mit dem zweiten Anschluß der Kommutierungsinduktivität (L1) und die Anzapfung (10) mit einem zweiten Anschluß des Beschaltungswiderstandes (R2) verbunden sind. Somit wirkt dieser GTO-Bremssteller für den Zwischenkreis wie ein handelsüblicher Bremssteller mit doppelter Frequenz, wobei das GTO-Phasenmodul (2) besser ausgenutzt und die Stromwelligkeit des Bremsstellers halbiert wird, wodurch sich ebenfalls die Spannungswelligkeit des Zwischenkreises ($C_{ZK}$) halbiert.

FIG 2

EP 0 857 605 A2

**Beschreibung**

Die Erfindung bezieht sich auf einen GTO-Bremssteller, der ein mit einer asymmetrischen Beschaltung aufweisendes GTO-Phasenmodul mit einem Beschaltungs-, Last-, Positiv- und Negativ-Anschluß, einen Beschaltungswiderstand, eine Kommutierungsinduktivität und einen Bremswiderstand aufweist, wobei jeweils ein erster Anschluß des Beschaltungswiderstandes mit dem Beschaltungs-Anschluß, der Kommutierungsinduktivität mit dem Negativ-Anschluß und des Bremswiderstandes mit dem Last-Anschluß verknüpft sind.

In dem Aufsatz "GTO-Pulswechselrichter mit Wirkstromregelung für Schienenfahrzeuge mit Gleichspannungsspeisung" von Hans-Peter Beck, abgedruckt in der DE-Zeitschrift "Elektrische Bahnen eb", Jahrgang 86, Heft 3/1988, Seiten 81 bis 93, ist im Bild 3 ein Schaltungskonzept für einen GTO-U-Umrichter mit Darstellung der Subsysteme und Beschaltung einer Wechselrichterphase dargestellt. Diesem Bild 3 ist zu entnehmen, daß unter anderem dieser GTO-U-Umrichter einen GTO-Bremssteller aufweist. Dieser GTO-Bremssteller besteht aus einem abschaltbaren Thyristor (Gate-Turn-Off-Thyristor), einer Leistungs-Diode und einem Bremswiderstand. Die Leistungs-Diode ist als Freilauf-Diode zum Bremswiderstand geschaltet, der elektrisch in Reihe zum GTO-Thyristor geschaltet ist. Dieser GTO-Bremssteller wird zur kombinierten Netz-Widerstandsbremse verwendet.

In der praktischen Ausführungsform dieses Bremsstellers sind die Leistungs-Diode und der GTO-Thyristor mittels Kühlkörper in einem Spannverband angeordnet, wobei dieser Spannverband im Traktionsstromrichter-Schrank angeordnet ist. Anstelle eines Spannverbandes müssen diese beiden Stromrichterventile zumindest mit einem Kühlkörper verschraubt sein. Der GTO-Thyristor benötigt mindestens eine RCD-Ventilbeschaltung zur GTO-nahen Bedampfung der Schaltüberspannung beim Ausschalten. Da diese Ventilbeschaltung außerdem möglichst nahe dem GTO-Thyristor angeordnet werden muß, damit der Wert der parasitären Induktivität gering ist, wurde in der Praxis ein bestehendes GTO-Phasenmodul für einen Bremssteller verwendet, das nur mit einem GTO-Thyristor bestückt ist. Das in Bild 3 dieses Aufsatzes abgebildete GTO-Phasenmodul weist für die Stromrichterventile eine symmetrische Beschaltung auf.

Aus der älteren deutschen Patentanmeldung mit dem amtlichen Aktenzeichen 195 47 464.3 ist ein Bremssteller für eine Widerstands- oder eine kombinierte Widerstands-Wirbelstrombremse bekannt. Dieser Bremssteller weist ein GTO-Phasenmodul mit symmetrischer Beschaltung und mit einem aufgetrennten Lastanschluß, einen Bremswiderstand, einen Schalter und einen Wirbelstrom-Bremsmagneten auf. Den beiden Anschlüssen des aufgetrennten Lastanschlüsse ist der Bremswiderstand elektrisch parallel geschaltet. Der Schalter und der Wirbelstrom-Bremsmagnet sind elektrisch in Reihe geschaltet. Diese Reihenschaltung ist einerseits mit einem Minusanschluß des GTO-Phasenmoduls und andererseits derart mit dem Bremswiderstand und einem Anschluß des aufgetrennten Lastanschlusses elektrisch leitend verbunden, daß der Bremswiderstand und der Wirbelstrom-Bremsmagnet elektrisch in Reihe schaltbar sind. Durch die Verwendung eines GTO-Phasenmoduls mit symmetrischer Beschaltung mit aufgetrenntem Lastanschluß eines Bremswiderstandes und eines Wirbelstrom-Bremsmagneten erhält man einen Bremssteller, bei dem unabhängig von der Verwendung des Wirbelstrom-Bremsmagneten bei einem Bremsvorgang immer der Bremswiderstand eingeschaltet ist.

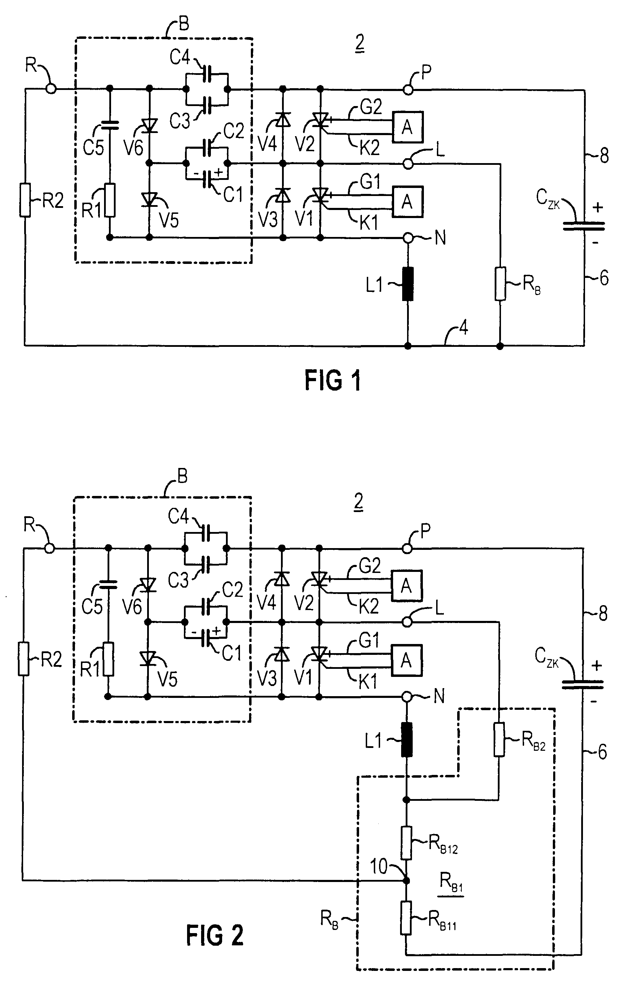

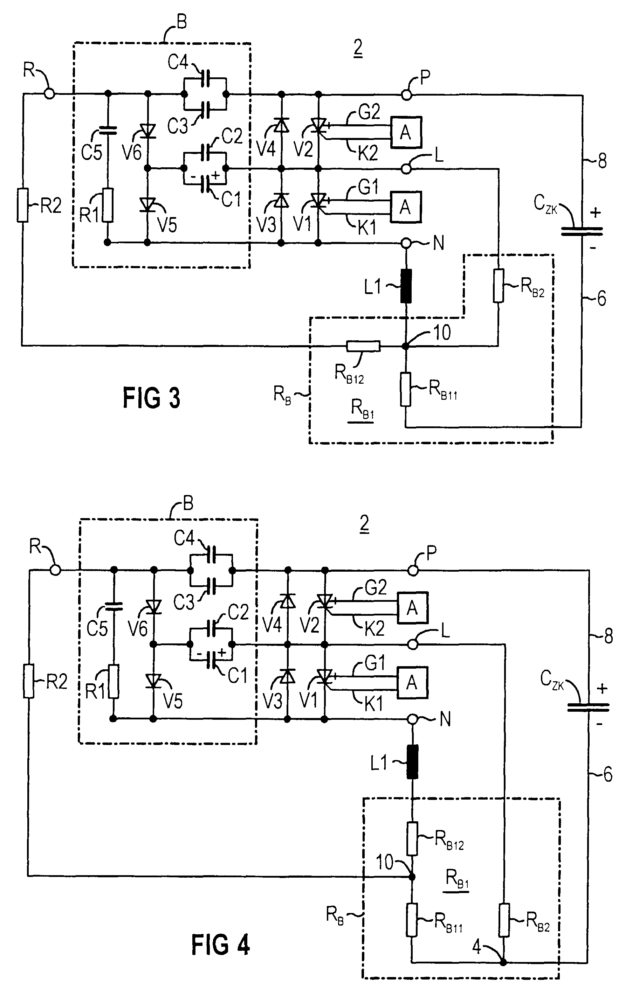

In dem Aufsatz "High Power GTO Converters for the new German High Speed Train ICE", von Herrn R. Marquardt, abgedruckt in "EPE Aachen", 1989, Seiten 583 bis 587, ist in FIG 3 ein Ersatzschaltbild eines GTO-Leistungs-Phasenmoduls dargestellt, wobei in der FIG 2 die Realisierung dieses Ersatzschaltbildes als siedebadgekühltes Phasenmodul dargestellt ist. Dieses GTO-Phasenmodul ist mit einer asymmetrischen Beschaltung versehen. Außerdem weist dieses Phasenmodul einen Beschaltungs-Anschluß R, einen Positiv-Anschluß P, einen Negativ-Anschluß N und einen Last-Anschluß L auf.

Das Bild 6 des Aufsatzes "Stand der Ansteuer-, Beschaltungs- und Schutztechnik beim Einsatz von GTO-Thyristoren" von R. Marquardt, abgedruckt in "ETG-Fachbericht", Band 23, 1988, Seiten 146 bis 169, zeigt das GTO-Leistungs-Phasenmodul im eingebauten Zustand. Dabei ist am Beschaltungs-Anschluß R dieses Phasenmoduls ein Beschaltungswiderstand R2 und an seinem Negativ-Anschluß N eine Kommutierungsinduktivität L1 angeschlossen, wobei jeweils deren zweiten Anschlüsse mit einer Minus-Stromschiene eines Gleichspannungs-Zwischenkreises verbunden sind. Der Positiv-Anschluß P dieses Phasenmoduls ist mit einer Plus-Stromschiene dieses Zwischenkreises verknüpft.

Da das GTO-Leistungs-Phasenmodul in den beiden letztgenannten Veröffentlichungen ausführlich beschrieben ist, wird bei der weiteren Beschreibung des GTO-Bremsstellers dieses Phasenmodul als Bauelement betrachtet.

In der FIG 1 ist ein Ersatzschaltbild eines bekannten GTO-Bremsstellers dargestellt. Dieser bekannte GTO-Bremssteller weist ein GTO-Phasenmodul 2, einen Beschaltungswiderstand R2, eine Kommutierungsinduktivität L1 und einen Bremswiderstand $R_B$ auf. Das GTO-Phasenmodul 2 weist eine asymmetrische Beschaltung B auf. Der Beschaltungswiderstand R2 ist mit seinem ersten Anschluß am Beschaltungs-Anschluß R des Phasenmoduls 2 und mit seinem zweiten Anschluß jeweils mit einem zweiten Anschluß der Kommutierungsinduktivität L1 und des Bremswiderstandes $R_B$ verbunden. Dieser gemeinsame Anschluß 4 ist mit einer Minus-Stromschiene 6 des Gleichspannungs-Zwischenkreises, der durch den Kondensator $C_{ZK}$ veranschaulicht ist, verbunden. Der Positiv-Anschluß P des GTO-Phasenmoduls 2 ist mit einer Plus-Stromschiene 8 des Zwischenkreiskondensators $C_{ZK}$ verbunden. Die Kommutierungsinduktivität L1 bzw. der Bremswiderstand $R_B$ ist mit ihrem ersten Anschluß mit dem Negativ-Anschluß N bzw. dem Last-Anschluß L des GTO-Phasenmoduls 2 verknüpft.

Beim Betrieb dieses bekannten Bremsstellers wird nur der abschaltbare Thyristor V2 und die Freilaufdiode V3 benutzt. In Abhängigkeit der benötigten Bremsleistung wird der GTO-Thyristor V2 des Phasenmoduls 2 getaktet. Die maximale Taktfrequenz $f_{GTO}$ wird von der Sperrschichtentemperatur des GTO-Thyristors V2 begrenzt. Die durch den Bremssteller im Zwischenkreis verursachte Welligkeit wird bestimmt von der Taktfrequenz $f_{GTO}$ und den Bremsstrom $I_{RB}$, der durch die Bremsleistung und der Bremsspannung gegeben ist.

Diese Welligkeit kann durch einen größeren Zwischenkreiskondensator $C_{ZK}$ oder durch die Verwendung eines speziellen Stromrichtermoduls anstelle des handelsüblichen GTO-Phasenmoduls, bei dem zwei GTO-Thyristoren elektrisch parallel geschaltet sind, und parallel betrieben werden, wodurch die Taktfrequenz $f_{GTO}$ etwa verdoppelt werden kann. Der Nachteil einer Vergrößerung des Zwischenkreiskondensators ist der hohe Aufwand am Zwischenkreiskondensator $C_{ZK}$ hinsichtlich der Kosten und der Platzbeanspruchung. Der Nachteil bei der Verwendung eines speziellen Stromrichtermoduls für den Bremssteller ist, daß dieses neue Stromrichtermodul entwickelt werden muß. Außerdem wurden dann bei einem Traktionsstromrichter verschiedene Module eingesetzt, die beim Auftreten von Defekten ausgetauscht werden müssen. Das heißt, die Lagerhaltung wird umfangreicher.

Der Erfindung liegt nunmehr die Aufgabe zugrunde, einen GTO-Bremssteller anzugeben, bei dem trotz Verwendung eines handelsüblichen GTO-Phasenmoduls seine Stromwelligkeit und damit die Spannungswelligkeit im Zwischenkreis ohne wesentlichen Aufwand halbiert werden kann.

Diese Aufgabe wird jeweils erfindungsgemäß gelöst mit dem kennzeichnenden Merkmal der Ansprüche 1 bis 4.

Durch die Aufteilung des Bremswiderstandes in einem ersten und zweiten Bremswiderstand, wobei der erste Bremswiderstand mittels einer Anzapfung in zwei elektrisch in Reihe geschaltete Teilwiderstände unterteilt ist, wird erreicht, daß bei gleichbleibender Taktfrequenz des GTO-Thyristors des GTO-Phasenmoduls die Rückwirkung auf den Zwischenkreis (die Spannungswelligkeit) infolge einer Halbierung der Stromwelligkeit, halbiert wird. Dabei ist ein erster Anschluß des zweiten Bremswiderstandes mit dem Last-Anschluß des GTO-Phasenmoduls verknüpft. Der zweite Anschluß dieses zweiten Bremswiderstandes ist entweder mit einem ersten Anschluß, mit einem zweiten Anschluß oder mit der Anzapfung des ersten Bremswiderstandes verbunden. Dieser erste Bremswiderstand mit seiner Anzapfung ist mit einem Anschluß mit einem zweiten Anschluß der Kommutierungsinduktivität und mit einem anderen Anschluß mit einem zweiten Anschluß des Beschaltungswiderstandes verknüpft.

Mittels dieser beiden verschalteten Bremswiderstände wird für eine Bremsleistung zwischen 0 % und 50 % der maximalen Bremsleistung nur der GTO-Thyristor V2 des GTO-Phasenmoduls getaktet, wogegen für eine Bremsleistung zwischen 50 % und 100 % der maximalen Bremsleistung dieser GTO-Thyristor V2 durchgezündet und nur der zweite GTO-Thyristor V1 dieses GTO-Phasenmoduls getaktet wird. Dadurch kann die Bremsleistung auf die beiden Bremswiderstände verteilt werden, wobei bei einer für die Stromwelligkeit günstige Auslegung in beiden Bremswiderständen die gleiche Bremsleistung umgesetzt wird. Diese erfindungsgemäßen Schaltungen des Bremsstellers wirken für einen Spannungs-Zwischenkreis wie ein herkömmlicher Bremssteller, jedoch mit doppelter Frequenz. Außerdem wird das GTO-Phasenmodul besser ausgenutzt.

Bei einer besonders vorteilhaften Ausführungsform des Bremsstellers wird der Beschaltungswiderstand des Phasenmoduls durch einen Teilwiderstand des ersten Bremswiderstandes ersetzt. Das heißt, ein erster Anschluß des ersten Bremswiderstands ist direkt mit dem Beschaltungs-Anschluß des GTO-Phasenmoduls, die Anzapfung dieses ersten Bremswiderstandes ist mittels der Kommutierungsinduktivität mit dem Negativ-Anschluß des Phasenmoduls und ein zweiter Anschluß dieses ersten Bremswiderstandes ist mit einem zweiten Anschluß des zweiten Bremswiderstandes verbunden, dessen erster Anschluß mit dem Last-Anschluß des GTO-Phasenmoduls verknüpft ist. Der Verknüpfungspunkt der beiden Bremswiderstände bildet einen Negativ-Anschluß des Bremsstellers. Bei dieser besonders vorteilhaften Ausführungsform sind die Widerstandswerte des zweiten Teilwiderstandes des ersten Bremswiderstandes und der zweite Bremswiderstand gleich. Demgegenüber entspricht der Widerstandswert des ersten Teilwiderstandes des ersten Bremswiderstandes etwa dem zwei- bis dreifachen Wert des bisherigen Beschaltungswiderstandes des GTO-Phasenmoduls. Diese Schaltungsvariante und dieser Dimensionierungsvorschlag wirkt sich besonders vorteilhaft auf die Verringerung der Stromwelligkeit aus.

Zur weiteren Erläuterung der Erfindung wird auf die Zeichnung Bezug genommen, in der mehrere Ausführungsformen des erfindungsgemäßen GTO-Bremsstellers schematisch veranschaulicht sind.

FIG 1   zeigt ein Ersatzschaltbild eines bekannten GTO-Bremsstellers, die

FIG 2 und 3   zeigen jeweils ein Ersatzschaltbild einer ersten und zweiten Ausführungsform eines erfindungsgemäßen GTO-Bremsstellers, die

FIG 4    zeigt ein Ersatzschaltbild einer vorteilhaften Ausführungsform des erfindungsgemäßen GTO-Bremsstellers und in

FIG 5    ist ein Ersatzschaltbild einer besonders vorteilhaften Ausführungsform des erfindungsgemäßen Bremsstellers dargestellt.

Bei den Darstellung der FIG 1 bis 5 werden gleiche Bauelemente mit denselben Bezugszeichen versehen. Außerdem sind die Darstellung bis auf den Bremswiderstand $R_B$ und dessen Verschaltung identisch, so daß in den folgenden Beschreibungen zu den FIG 2 bis 5 auf die Beschreibung des identischen Teils verzichtet wird.

In der FIG 2 besteht der Bremswiderstand $R_B$ aus einem ersten und zweiten Bremswiderstand $R_{B1}$ und $R_{B2}$. Der erste Bremswiderstand $R_{B1}$ ist derart mit einer Anzapfung 10 versehen, daß der erste Bremswiderstand $R_{B1}$ in zwei Teilwiderstände $R_{B11}$ und $R_{B12}$ unterteilt ist, die elektrisch in Reihe geschaltet sind. Von diesen beiden Teilwiderständen $R_{B11}$ und $R_{B12}$ ist der Wert des Teilwiderstandes $R_{B12}$ sehr viel kleiner als der Wert des Teilwiderstandes $R_{B11}$. Das Widerstandsverhältnis von $R_{B12}$ zu $R_{B11}$ beträgt nur einige Prozent, beispielsweise ungefähr 5 %. Die Anzapfung 10 des ersten Bremswiderstandes $R_{B1}$ ist mit einem zweiten Anschluß des Beschaltungswiderstandes R2 des GTO-Phasenmoduls 2 elektrisch leitend verbunden, wobei ein erster Anschluß des Teilwiderstandes $R_{B12}$ mit dem zweiten Anschluß der Kommutierungsinduktivität L1 und dem zweiten Anschluß des zweiten Bremswiderstandes $R_{B2}$ verknüpft ist. Ein zweiter Anschluß des Teilwiderstandes $R_{B11}$ ist mit der Minus-Stromschiene 6 des Spannungs-Zwischenkreises $C_{ZK}$ elektrisch leitend verbunden. Der zweite Bremswiderstand $R_{B2}$ verbindet den Last-Anschluß L des GTO-Phasenmoduls 2 mit dem Verbindungspunkt von Kommutierungsinduktivität L1 und Teilwiderstand $R_{B12}$ des ersten Bremswiderstandes $R_{B1}$.

In der FIG 3 weist der Bremswiderstand $R_B$ ebenfalls zwei Bremswiderstände $R_{B1}$ und $R_{B2}$ auf. Ebenfalls ist der erste Bremswiderstand $R_{B1}$ mit einer Anzapfung 10 versehen, so daß dieser Bremswiderstand $R_{B1}$ in zwei Teilwiderstände $R_{B11}$ und $R_{B12}$ unterteilt ist. Bei dieser Ausführungsform ist die Anzapfung 10 des ersten Bremswiderstandes $R_{B1}$ mit dem zweiten Anschluß der Kommutierungsinduktivität L1 und mit einem zweiten Anschluß des zweiten Bremswiderstandes $R_{B2}$ elektrisch leitend verbunden. Der erste Anschluß des Teilwiderstandes $R_{B12}$ ist mit dem zweiten Anschluß des Beschaltungswiderstandes R2 des GTO-Phasenmoduls 2 elektrisch in Reihe geschaltet. Der zweite Anschluß des Teilwiderstandes $R_{B11}$ des ersten Bremswiderstandes $R_{B1}$ ist mit der Minus-Stromschiene 6 des Zwischenkreises $C_{ZK}$ elektrisch leitend verbunden.

Beim erfindungsgemäßen GTO-Bremssteller werden beide GTO-Thyristoren V2 und V1 des GTO-Phasenmoduls 2 beim Bremsbetrieb verwendet. Dabei wird für eine Bremsleistung zwischen 0 % und 50 % der maximalen Bremsleistung nur der GTO-Thyristor V2 (Aussteuerung zwischen 0 und 95 %) getaktet. Somit fließt der Bremsstrom $I_{RB}$ durch die Reihenschaltung der Bremswiderstände $R_{B2}$ und $R_{B1} = R_{B11} + R_{B12}$ (FIG 2) bzw. der Reihenschaltung des Bremswiderstand $R_{B2}$ und des Teilwiderstandes $R_{B12}$ des ersten Bremswiderstandes $R_{B1}$ (FIG 3). Das heißt, daß beide Bremswiderstände $R_{B2}$ und $R_{B1}$ belastet werden. Für eine Bremsleistung zwischen 50 % und 100 % der maximalen Bremsleistung wird der GTO-Thyristor V2 durchgezündet und der GTO-Thyristor V1 des GTO-Phasenmoduls 2 wird getaktet. In diesem Leistungsbereich wird der Bremswiderstand $R_{B2}$ immer weniger belastet, so daß bei maximaler Aussteuerung nur noch der Bremswiderstand $R_{B1}$ belastet wird.

Bei beiden Ausführungsformen wird durch die Taktung beider GTO-Thyristoren V2 und V1 die Stromwelligkeit halbiert. Das heißt, bei gleichbleibender Taktfrequenz wird die Rückwirkung auf den Zwischenkreis $C_{ZK}$ halbiert. Außerdem wird der Bremswiderstand $R_B$, bestehend aus den Bremswiderständen $R_{B2}$ und $R_{B1} = R_{B11} + R_{B12}$, bei Aussteuerung bis 50 % der maximalen Bremsleistung gut ausgenutzt, wobei der Bremswiderstand $R_{B1}$ oberhalb dieser Leistungsgrenze sehr hoch belastet wird. Bei der Ausführungsform gemäß FIG 2 wird ebenfalls der Teilwiderstand $R_{B12}$ des ersten Bremswiderstandes $R_{B1}$ belastet, so daß an ihm eine Spannung, die sogenannte Vorspannung, abfällt. Diese Vorspannung befindet sich auf den Beschaltungskondensatoren C1 und C2 der Beschaltung B und erhöht damit die Belastung des GTO-Thyristors V1 des Phasenmoduls 2.

Die FIG 4 zeigt eine vorteilhafte Ausführungsform des erfindungsgemäßen GTO-Bremsstellers. Bei dieser Ausführungsform ist der erste Bremswiderstand $R_{B1}$ zwischen der Kommutierungsinduktivität L1 und der Minus-Stromschiene 6 des Zwischenkreises $C_{ZK}$ derart angeordnet, daß ein erster Anschluß des Teilwiderstandes $R_{B12}$ mit dem zweiten Anschluß der Kommutierungsinduktivität L1 und ein zweiter Anschluß des Teilwiderstandes $R_{B11}$ mit der Minus-Stromschiene 6 verbunden ist. Die Anzapfung 10 der beiden Teilwiderstände $R_{B11}$ und $R_{B12}$ ist mit einem zweiten Anschluß des Beschaltungswiderstandes R2 des GTO-Phasenmoduls 2 elektrisch leitend verbunden. Der erste Anschluß des zweiten Bremswiderstandes $R_{B2}$ ist mit dem Last-Anschluß L des GTO-Phasenmoduls 2 und sein zweiter Anschluß ist mit dem zweiten Anschluß des ersten Teilwiderstandes $R_{B11}$ des ersten Bremswiderstandes $R_{B1}$ verknüpft, wobei dieser gemeinsame Anschluß 4 mit der Minus-Stromschiene 6 des Zwischenkreises $C_{ZK}$ verbunden ist.

Bei dieser vorteilhaften Ausführungsform wird für eine Bremsleistung zwischen 0 % und 50 % der maximalen Leistung der GTO-Thyristor V2 des GTO-Phasenmoduls 2 getaktet. Somit fließt der Bremsstrom $I_{RB}$ nur durch den zweiten Bremswiderstand $R_{B2}$. Für eine Bremsleistung zwischen 50 % und 100 % der maximalen Bremsleistung wird der GTO-Thyristor V2 durchgezündet und der GTO-Thyristor V1 des GTO-Phasenmoduls 2 wird getaktet. Somit wird im zweiten Bremswiderstand $R_{B2}$ eine konstante Bremsleistung umgesetzt, wobei im ersten Bremswiderstand $R_{B1} = R_{B11} + R_{B12}$ die verbleibende Bremsleistung umgesetzt wird. Durch die Verschaltung des Bremswiderstandes $R_B$ wird der erste Bremswiderstand $R_{B1}$ besser ausgenutzt, obwohl eine Vorspannung am Teilwiderstand $R_{B12}$ abfällt. Eine für die Stromwelligkeit günstige Auslegung der Widerstände $R_{B11}$ und $R_{B2}$ ist die, daß deren Widerstandswerte gleich groß sind. Es sind auch andere Wertepaare möglich. Da der Widerstandswert des Teilwiderstandes $R_{B12}$ nur etwa 5 % des widerstandswertes des ersten Bremswiderstandes $R_{B1}$ aufweist, können die Bremswiderstände $R_{B1}$ und $R_{B2}$ so dimensioniert werden, daß deren Widerstandswerte gleich sind.

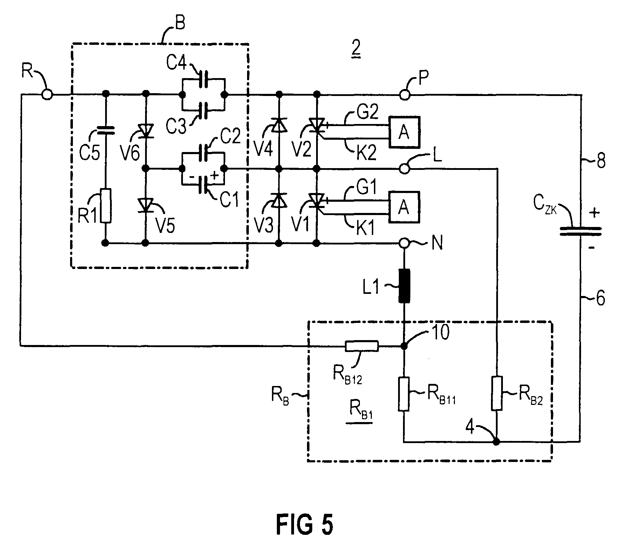

In der FIG 5 ist eine besonders vorteilhafte Ausführungsform des erfindungsgemäßen GTO-Bremsstellers dargestellt. Bei dieser Ausführungsform ist die Anzapfung 10 des ersten Bremswiderstandes $R_{B1}$ mit dem zweiten Anschluß der Kommutierungsinduktivität L1 elektrisch leitend verbunden. Der erste Anschluß des zweiten Teilwiderstandes $R_{B12}$ des ersten Bremswiderstandes $R_{B1}$ ist mit dem Beschaltungs-Anschluß R des GTO-Phasenmoduls 2 verknüpft. Der zweite Anschluß des ersten Teilwiderstandes $R_{B11}$ ist wie in der FIG 4 mit dem zweiten Anschluß des zweiten Bremswiderstandes $R_{B2}$ verbunden, wobei ebenfalls dieser gemeinsame Anschluß 4 mit der Minus-Stromschiene 6 des Zwischenkreises $C_{ZK}$ verknüpft ist. An der Plazierung des zweiten Bremswiderstandes $R_{B2}$ hat sich gegenüber der FIG 4 nichts geändert. Bei dieser Ausführungsform ist der Beschaltungswiderstand R2 des GTO-Phasenmoduls 2 ersetzt durch den zweiten Teilwiderstand $R_{B12}$ des ersten Bremswiderstandes $R_{B1}$. Deshalb ist der zweite Teilwiderstand $R_{B12}$ so bemessen, daß sein Widerstandswert ungefähr gleich dem zweifachen bis dreifachen Wert des bisherigen Beschaltungswiderstandes R2 ist. Dadurch benötigt der GTO-Bremssteller weniger Raum und der Montageaufwand wird weniger.

Durch die Aufteilung des Bremswiderstandes $R_B$ in zwei Bremswiderstände $R_{B1}$ und $R_{B2}$ erhält man gemäß den FIG 2 bis 5 jeweils einen GTO-Bremssteller, der für den Zwischenkreis $C_{ZK}$ wie ein herkömmlicher GTO-Bremssteller mit doppelter Frequenz wirkt. Da die Zwischenkreiswelligkeit oft der Engpaß bei der Auslegung des GTO-Bremsstellers ist und die Taktfrequenz $f_{GTO}$ des GTO-Thyristors V2 thermisch begrenzt ist, ergibt die erfindungsgemäße Schaltung des GTO-Bremsstellers eine bessere Ausnutzung des GTO-Phasenmoduls 2. Dadurch ist für die Lösung der eingangs genannten Probleme kein gesonderter Bremsstellerbaustein erforderlich. Durch die Aufteilung des Bremswiderstandes $R_B$ in Verbindung eines handelsüblichen GTO-Phasenbausteins 2 mit asymmetrischer Beschaltung B wird erreicht, daß die Stromwelligkeit des Bremsstellers halbiert wird, wodurch ebenfalls die Spannungswelligkeit des Zwischenkreises $C_{ZK}$ halbiert wird.

## Patentansprüche

1.  GTO-Bremssteller, der ein mit einer asymmetrischen Beschaltung (B) aufweisendes GTO-Phasenmodul (2) mit einem Beschaltungs-, Last-, Positiv- und Negativ-Anschluß (R,L,P,N), einen Beschaltungswiderstand (R2), eine Kommutierungsinduktivität (L1) und einen Bremswiderstand ($R_B$) aufweist, wobei jeweils ein erster Anschluß des Beschaltungswiderstandes (R2) mit dem Beschaltungs-Anschluß (R), der Kommutierungsinduktivität (L1) mit dem Negativ-Anschluß (N) und des Bremswiderstandes ($R_B$) mit dem Last-Anschluß (L) verknüpft sind, **dadurch gekennzeichnet,** daß als Bremswiderstand ($R_B$) zwei Bremswiderstände ($R_{B1}$, $R_{B2}$) vorgesehen sind, wobei ein erster Anschluß des zweiten Bremswiderstandes ($R_{B2}$) mit dem Last-Anschluß (L) und ein zweiter Anschluß mit einem zweiten Anschluß der Kommutierungsinduktivität (L1) verknüpft sind, daß der erste Bremswiderstand ($R_{B1}$) mittels einer Anzapfung (10) in zwei Teilwiderstände ($R_{B11}$, $R_{B12}$) unterteilt ist, daß ein erster Anschluß des zweiten Teilwiderstandes ($R_{B12}$) des ersten Bremswiderstandes ($R_{B1}$) mit dem zweiten Anschluß der Kommutierungsinduktivität (L1) und die Anzapfung (10) mit einem zweiten Anschluß des Beschaltungswiderstandes (R2) verbunden sind, und daß ein zweiter Anschluß des ersten Teilwiderstandes ($R_{B11}$) des ersten Bremswiderstandes ($R_{B1}$) einen Negativ-Anschluß des GTO-Bremsstellers bildet (FIG 2).

2.  GTO-Bremssteller, der ein mit einer asymmetrischen Beschaltung (B) aufweisendes GTO-Phasenmodul (2) mit einem Beschaltungs-, Last-, Positiv- und Negativ-Anschluß (R,L,P,N), einen Beschaltungswiderstand (R2), eine Kommutierungsinduktivität (L1) und einen Bremswiderstand ($R_B$) aufweist, wobei jeweils ein erster Anschluß des Beschaltungswiderstandes (R2) mit dem Beschaltungs-Anschluß (R), der Kommutierungsinduktivität (L1) mit dem Negativ-Anschluß (N) und des Bremswiderstandes ($R_B$) mit dem Last-Anschluß (L) verknüpft sind, **dadurch gekennzeichnet,** daß als Bremswiderstand ($R_B$) zwei Bremswiderstände ($R_{B1}$, $R_{B2}$) vorgesehen sind, wobei ein erster Anschluß des zweiten Bremswiderstandes ($R_{B2}$) mit dem Last-Anschluß (L) und ein zweiter Anschluß mit einem zweiten Anschluß der Kommutierungsinduktivität (L1) verknüpft sind, daß der erste Bremswiderstand ($R_{B1}$) mittels einer Anzapfung (10) in zwei Teilwiderstände ($R_{B11}$, $R_{B12}$) unterteilt ist, daß ein erster Anschluß des zweiten Teilwiderstandes ($R_{B12}$) des ersten Bremswiderstandes ($R_{B1}$) mit einem zweiten Anschluß des Beschaltungswiderstandes (R2) und die Anzapfung (10) mit dem zweiten Anschluß der Kommutierungsinduktivität (L1) verbunden sind, und daß ein zweiter Anschluß des ersten Teilwiderstandes ($R_{B11}$) des ersten Bremswiderstandes ($R_{B1}$) einen Negativ-Anschluß des GTO-Bremsstellers bildet (FIG 3).

3. GTO-Bremssteller, der ein mit einer asymmetrischen Beschaltung (B) aufweisendes GTO-Phasenmodul (2) mit einem Beschaltungs-, Last-, Positiv- und Negativ-Anschluß (R,L,P,N), einen Beschaltungswiderstand (R2), eine Kommutierungsinduktivität (L1) und einen Bremswiderstand ($R_B$) aufweist, wobei jeweils ein erster Anschluß des Beschaltungswiderstandes (R2) mit dem Beschaltungs-Anschluß (R), der Kommutierungsinduktivität (L1) mit dem Negativ-Anschluß (N) und des Bremswiderstandes ($R_B$) mit dem Last-Anschluß (L) verknüpft sind,
**dadurch gekennzeichnet**,
daß als Bremswiderstand ($R_B$) zwei Bremswiderstände ($R_{B1}$, $R_{B2}$) vorgesehen sind, wobei ein erster Anschluß des zweiten Bremswiderstandes ($R_{B2}$) mit dem Last-Anschluß (L) verknüpft ist, daß der erste Bremswiderstand ($R_{B1}$) mittels einer Anzapfung (10) in zwei Teilwiderstände ($R_{B11}$, $R_{B12}$) unterteilt ist, daß ein erster Anschluß des zweiten Teilwiderstandes ($R_{B12}$) des ersten Bremswiderstandes ($R_{B1}$) mit einem zweiten Anschluß der Kommutierungsinduktivität (L1) und die Anzapfung (10) mit einem zweiten Anschluß des Beschaltungswiderstandes (R2) verbunden sind, und daß ein zweiter Anschluß des ersten Teilwiderstandes ($R_{B11}$) des ersten Bremswiderstandes ($R_{B1}$) und ein zweiter Anschluß des zweiten Bremswiderstandes ($R_{B1}$) gemeinsam einen Negativ-Anschluß des GTO-Bremsstellers bilden (FIG 4).

4. GTO-Bremssteller, der ein mit einer asymmetrischen Beschaltung (B) aufweisendes GTO-Phasenmodul (2) mit einem Beschaltungs-, Last-, Positiv- und Negativ-Anschluß (R,L,P,N), einen Beschaltungswiderstand (R2), eine Kommutierungsinduktivität (L1) und einen Bremswiderstand ($R_B$) aufweist, wobei jeweils ein erster Anschluß des Beschaltungswiderstandes (R2) mit dem Beschaltungs-Anschluß (R), der Kommutierungsinduktivität (L1) mit dem Negativ-Anschluß (N) und des Bremswiderstandes ($R_B$) mit dem Last-Anschluß (L) verknüpft sind,

**dadurch gekennzeichnet**,
daß als Bremswiderstand ($R_B$) zwei Bremswiderstände ($R_{B1}$, $R_{B2}$) vorgesehen sind, wobei ein erster Anschluß des zweiten Bremswiderstandes ($R_{B2}$) mit dem Last-Anschluß (L) verknüpft ist, daß der erste Bremswiderstand ($R_{B1}$) mittels einer Anzapfung (10) in zwei Teilwiderstände ($R_{B11}$, $R_{B12}$) unterteilt ist, daß ein erster Anschluß des zweiten Teilwiderstandes ($R_{B12}$) des ersten Bremswiderstandes ($R_{B1}$) mit einem zweiten Anschluß des Beschaltungswiderstandes (R2) und die Anzapfung (10) mit einem zweiten Anschluß der Kommutierungsinduktivität (L1) verbunden sind, und daß ein zweiter Anschluß des ersten Teilwiderstandes ($R_{B11}$) des ersten Bremswiderstandes ($R_{B1}$) und ein zweiter Anschluß des zweiten Bremswiderstandes ($R_{B2}$) gemeinsam einen Negativ-Anschluß des GTO-Bremsstellers bilden (FIG 5).

5. GTO-Bremssteller nach einem der Ansprüche 1 bis 4, wobei der Widerstandswert des ersten Bremswiderstandes ($R_{B1}$) und des zweiten Bremswiderstandes ($R_{B2}$) gleich sind.

6. GTO-Bremssteller nach einem der Ansprüche 1 bis 3, wobei der Widerstandswert des zweiten Teilwiderstandes ($R_{B12}$) etwa 10 % des Widerstandswertes des ersten Bremswiderstandes ($R_{B1}$) ist.

7. GTO-Bremssteller nach einem der Ansprüche 1 bis 3, wobei der Widerstandswert des zweiten Teilwiderstandes ($R_{B12}$) etwa 5 % des Widerstandswertes des ersten Bremswiderstandes ($R_{B1}$) ist.

8. GTO-Bremssteller nach Anspruch 4, wobei die Widerstandswerte des ersten Teilwiderstandes ($R_{B11}$) des ersten Bremswiderstandes ($R_{B1}$) und des zweiten Bremswiderstandes ($R_{B2}$) gleich sind.

9. GTO-Bremssteller nach Anspruch 4, wobei der Widerstandswert des zweiten Teilwiderstandes ($R_{B12}$) gleich dem zweifachen bis dreifachen Wert des Beschaltungswiderstandes (R2) ist.

10. Verfahren zum Betrieb des GTO-Bremsstellers nach einem der Ansprüche 1 bis 4, wobei für eine Bremsleistung zwischen 0 % und 50 % der maximalen Bremsleistung ein zwischen dem Positiv- und dem Last-Anschluß (P, L) des GTO-Phasenmoduls (2) angeordnetes Stromrichterventil (V2) getaktet wird, und wobei für eine Bremsleistung zwischen 50 % und 100 % der maximalen Bremsleistung dieses Stromrichterventil (V2) durchgezündet ist und ein zweites Stromrichterventil (V1) dieses GTO-Phasenmoduls (2) getaktet wird.

FIG 1

FIG 2

FIG 3

FIG 4

8

**FIG 5**